# EUROPÄISCHE PATENTSCHRIFT

(11) **EP 0 357 931 B1**
(45) Veröffentlichungstag und Bekanntmachung des Hinweises auf die Patenterteilung: **28.04.1993**
(21) Anmeldenummer: 89113770.5
(22) Anmeldetag: 26.07.1989
(51) Int. Cl.: B01D 46/04, B01D 46/24

(54) **Druckfilter**
Pressurized gas filter
Filtre à pression de gaz

(30) Priorität: 09.09.1988 DE 3830688
(43) Veröffentlichungstag der Anmeldung: 14.03.1990
(73) Patentinhaber: Krupp Koppers GmbH, 45143 Essen (DE)
(72) Erfinder: Giese, Manfred, D-4300 Essen 16 (DE); Wacker, Wolfgang, D-4300 Essen 17 (DE)

(56) Entgegenhaltungen:
- EP-A- 0 078 678
- EP-A- 0 176 362
- EP-A- 0 347 620
- GB-A- 2 044 123
- US-A- 3 837 151
- US-A- 4 482 461

## Beschreibung

Die Erfindung betrifft einen Druckfilter, bestehend aus zwei oder mehreren, jeweils in einem Einzelrohr vertikal angeordneten und von dem zu filtrierenden Medium von außen nach innen durchflossenen Filterelementen, wobei die an ihrem unteren Ende offenen Einzelrohre in einen gemeinsamen Abschluß münden, der mit der Eintrittsleitung für das zu filtrierende Medium in Verbindung steht.

Ein Filter mit den vorstehend genannten Merkmalen ist aus der US-A-4 482 461 bekannt. Dabei handelt es sich um ein rückspülbares Flüssigkeitsfilter, bei dem während des Filterbetriebes im Turnus jeweils ein Filterelement durch rückwärtiges Spülen mit Filtrat freigespült wird. Zu diesem Zweck wird ein gekrümmtes Rohr mittels einer Dreheinrichtung zu den einzelnen Rohren gedreht, die die Filterelemente beherbergen und die auf einem Kreisring angeordnet sind. Sobald das gekrümmte Rohr und eines der die Filterelemente beherhergenden Rohre zentrisch übereinander stehen, wird durch Betätigen eines Ventiles der Rückspülvorgang ausgelöst. Die Rohre mit den Filterelementen enden bei dieser Konstruktion oben alle in einer gemeinsamen Filtratsammelkammer, aus der das gesammelte Filtrat über einen Stutzen abgezogen werden kann.

Die EP-A-0 078 678 beschreibt ein Verfahren und eine Vorrichtung zur Abreinigung von Filtern, bei der ein Gasstrom mit hoher Geschwindigkeit an der Anströmseite des Filterelementes entlanggeführt wird. Zur Führung dieses Gasstromes ist ein Leitblech vorgesehen, das bei Verwendung von runden Filterelementen zylindrisch ausgeführt ist und das nicht als Filtergehäuse dient. Das Filterelement mit dem dazugehörigen Leitblech ist vielmehr in einem konventionell gebauten Filtergehäuse untergebracht.

Die EP-A-0 347 620 (Priorität 18.6.1988, Anmeldetag 31.5.89, Veröffentlichungstag 27.12.89) betrifft einen Druckfilter der eingangs genannten Art, bei dem die die Filterelemente beherbergenden Einzelrohre sowohl einen runden als auch einen ovalen oder eckigen Querschnitt, z.B. als Dreieck-, Viereck- oder Sechseckrohre, aufweisen können. Zwei oder mehrere Einzelrohre werden hierbei in maximaler Packungsdichte zu einer baulichen Einheit zusammengefaßt und fest miteinander verbunden. Eine derartige Filtereinheit bildet gewissermaßen den Grundkörper.

Hierbei kann der Druckfilter auch in Modulbauweise aus mehreren derartigen Grundkörpern zusammengesetzt sein, wobei die einzelnen Module getrennt voneinander zu- und abschaltbar sind. Dadurch gelingt es, die Filterleistung der jeweils anfallenden Menge des zu filtrierenden Mediums anzupassen, ohne daß irgendwelche baulichen Veränderungen an der Filteranlage vorgenommen werden müssen.

Durch die Anwendung des Druckfilters nach der EP-A-0347620 ergeben sich gegenüber den bisher bekannten Konstruktionen eine ganze Reihe von Vorteilen, die wie folgt zusammengefaßt werden können:
- Jedes Filterelement kann einzeln auf einfache Weise demontiert und ausgetauscht werden, ohne daß eine Behälterhaube demontiert werden muß.
- Da die Behälterdecke eben und stabil ist, kann sie zur Reparatur gut begangen werden.
- An einzelnen Filterelementen auftretende Defekte können leicht lokalisiert werden.
- Durch die Möglichkeit der Anwendung der Modulbauweise kann die Filterkapazität rasch und ohne große Schwierigkeiten veränderten Gegebenheiten angepaßt werden.
- Durch eine mögliche kastenförmige Bauweise kann eine optimale Raumausnutzung des Aufstellumgsortes erreicht werden.
- Hebezeuge oder ähnliche Einrichtungen werden zum Austausch der Filterelemente nicht benötigt.
- Der Ersatz von großen Behälterflanschdichtungen bei jeder Reparatur entfällt.

Hierbei wird die Anwendung des beanspruchten Druckfilters nur im Bezug auf die Filtration von Flüssigkeiten beschrieben. Es hat sich in der Praxis jedoch gezeigt, daß diese Konstruktion grundsätzlich auch für die Abscheidung von Feststoffen aus Gasen geeignet ist. Die vorliegende Erfindung betrifft deshalb eine weitere Ausgestaltung des Druckfilters nach der EP-A-0 347 620, die insbesondere für die Abscheidung von Feststoffen aus Gasen geeignet ist und bei der die Abreinigung der beladenen Filterelemente diesem Verwendungsweck angepaßt werden soll.

Die erfindungsgemäße Ausgestaltung des Druckfilters der eingangs genannten Art ist dabei dadurch gekennzeichnet, daß die Einzelrohre in maximaler Packungsdichte miteinander fest verbunden sind und jedes Filterelement über eine eigene, ihm zugeordnete Austrittsleitung mit einer außerhalb des Druckfilters angeordneten und mit einem Ventil versehenen Sammelleitung verbunden ist, wobei jede Austrittsleitung über einen Düsenstock und ein Zuführungsrohr mit einem durch ein Ventil verschließbaren Druckgasspeicher in Verbindung steht.

Weitere Einzelheiten der erfindungsgemäßen Konstruktion sowie deren Wirkungsweise sollen nachfolgend an Hand der Abbildungen erläutert werden. Diese betreffen ein Ausführungsbeispiel des erfindungsgemäßen Druckfilters, bei dem sowohl die Einzelrohre als auch der Abschlußkonus einen kreisförmigen Querschnitt aufweisen. Hierbei zeigen:
- Fig. 1: einen Längsschnitt durch einen erfindungsgemäßen Druckfilter,
- Fig. 2: einen Querschnitt durch den Druckfilter gemäß Fig. 1,
- Fig. 3: das Detail "A" in Fig. 1 und
- Fig. 4: das Detail "B" in Fig. 1.

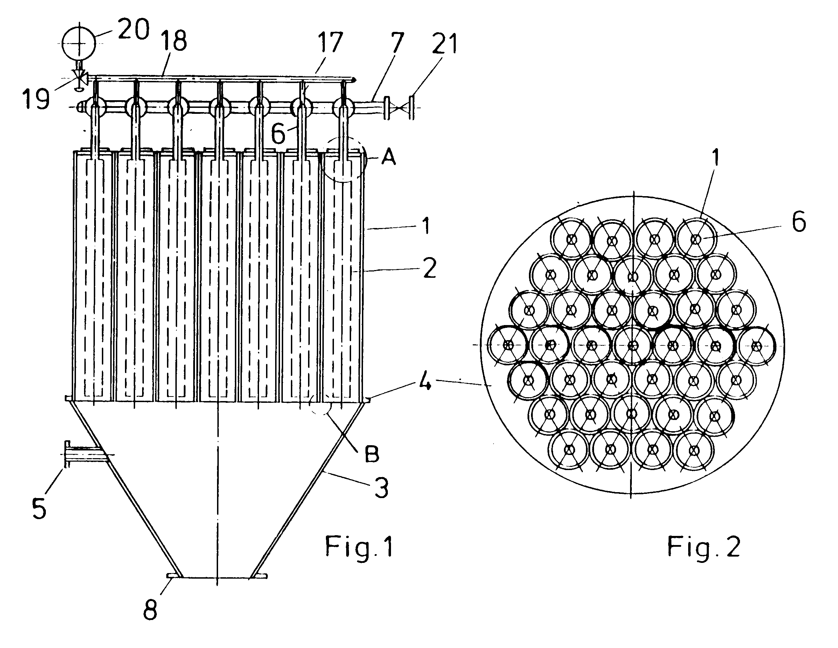

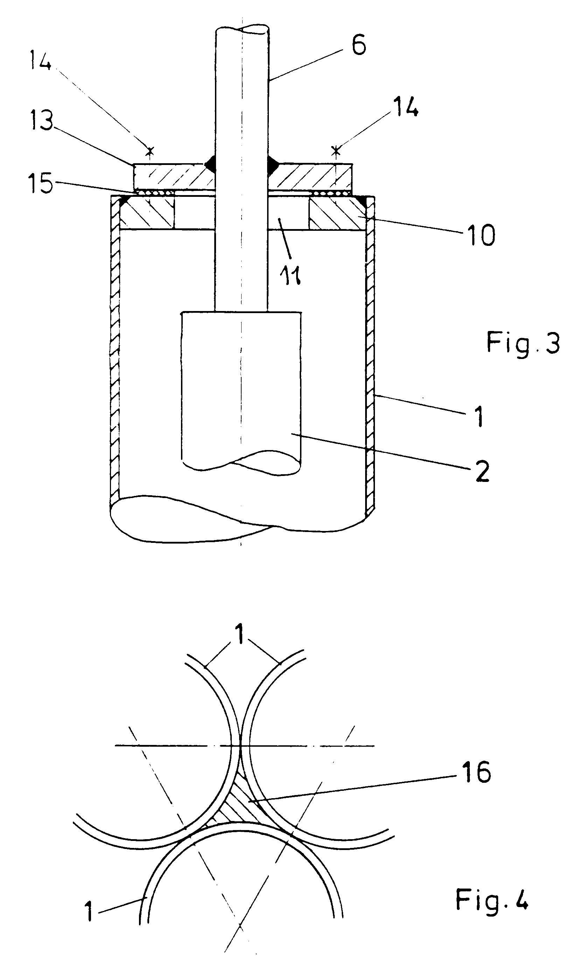

Bei dem in Fig. 1 dargestellten Druckfilter ist der Filterbehälter aus einer Vielzahl von Einzelrohren 1 zusammengesetzt, in denen sich jeweils ein Filterelement (Filterkerze oder Filterschlauch) 2 befindet. Hierbei kann es sich um ein Filterelement herkömmlicher Bauart handeln, auf dessen konstruktive Einzelheiten hier nicht näher eingegangen zu werden braucht, da dies nicht Gegenstand der vorliegenden Erfindung ist. Das Filterelement 2 wird dabei von oben in das jeweilige Einzelrohr 1 eingeführt und ist mit diesem druckdicht verbunden. Auf dieses Detail "A" wird weiter unten im Zusammenhang mit Fig. 3 noch näher eingegangen werden. Die unten offenen Einzelrohre 1 münden in den Abschlußkonus 3. Zur Verbindung zwischen den Einzelrohren 1 und dem Abschlußkonus 3 ist am unteren Ende der Einzelrohre 1 ein Blech 4 angeordnet, welches mit den außenliegenden Einzelrohren 1 und dem Abschlußkonus 3 fest und druckdicht verbunden ist. Die Verbindungen zwischen den Einzelrohren 1 sind ebenfalls fest und druckdicht verschlossen. Auf dieses Detail "B" wird weiter unten im Zusammenhang mit Fig. 4 noch näher eingegangen werden.

Die Wirkungsweise des erfindungsgemäßen Druckfilters unterscheidet sich bei Anwendung auf die Gasreinigung konzeptionell nicht von der Wirkungsweise des Druckfilters nach der EP-A-0 347 620. Die in der Abbildung nicht dargestellte Eintrittsleitung für das zu filtrierende Gas ist dabei an den Stutzen 5 angeschlossen, über den das feststoffbeladene Gas in den Filterbehälter eintritt. Unter Druckanwendung wird das Gas von außen nach innen durch die Filterelemente 2 gepreßt, wobei das von den Feststoffen befreite Gas jeweils über die Austrittsleitung 6, die jedem Filterelement 2 zugeordnet ist, abgezogen wird. Die einzelnen Austrittsleitungen 6 münden in die Sammelleitung 7. Hierbei kann der erfindungsgemäße Druckfilter eine oder mehrere Sammelleitungen 7 aufweisen. Der sich auf der äußeren Oberfläche der Filterelemente 2 abscheidende Feststoff wird in bestimmten Zeitintervallen bzw. nach Erreichen eines bestimmten Differenzdruckes durch einen Druckstoß entgegen der Fließrichtung des Gases von den Filterelementen 2 abgestoßen. Hierzu wird zunächst das Ventil 21 in der Sammelleitung 7 geschlossen, so daß keine Strömung mehr in den an die Sammelleitung 7 angeschlossenen Austrittsleitungen 6 vorhanden ist. Nun wird das Ventil 19 am Druckgasspeicher 20 schlagartig geöffnet, so daß hochgespanntes Gas über das Zuführungsrohr 18 und den Düsenstock 17 impulsartig in das Filterelement 2 geblasen wird. Da in den Einzelrohren 1 während dieses Vorganges keine Gasströmung vorhanden ist, kann der durch den Druckstoß von der Außenseite der Filterelemente 2 abgestoßene Feststoff schnell in den Abschlußkonus 3 absinken. Der abgestoßene Feststoff sammelt sich hierbei im Unterteil des Abschlußkonusses 3 und wird über den Stutzen 8 abgezogen. Nach Beendigung des Abreinigungsvorganges wird das Ventil 19 am Druckgasspeicher 20 geschlossen und das Ventil 21 in der Sammelleitung 7 wieder geöffnet, so daß der Filtrationsvorgang fortgesetzt werden kann.

Fig. 2 zeigt einen Querschnitt durch den in Fig. 1 dargestellten Druckfilter. Aus der Abbildung erkennt man daß in diesem Falle sowohl die Einzelrohre 1 als auch das Blech 4 mit dem darunter liegenden Abschlußkonus 3 einen kreisförmigen Querschnitt aufweisen. Die Anwendung dieser Ausführungsform ist insbesondere dann angebracht, wenn der erfindungsgemäße Druckfilter nur aus einem einzigen Grundkörper besteht.

Soll dagegen der erfindungsgemäße Druckfilter aus mehreren Modulen zusammengesetzt sein, so empfiehlt es sich, daß in diesem Falle sowohl die Einzelrohre 1 als auch das Blech 4 mit dem darunter liegenden Abschlußkonus 3 einen rechteckigen Querschnitt aufweisen. Die daraus resultierende kastenförmige Bauweise ermöglicht nämlich eine besonders optimale Raumausnutzung des zur Verfügung stehenden Aufstellungsortes. Der konstruktive Aufbau und die Wirkungsweise entsprechen dabei im übrigen dem weiter oben beschriebenen Ausführungsbeispiel, so daß auf eine gesonderte zeichnerische Darstellung dieser Ausführungsform verzichtet werden kann.

Die Fig. 3 betrifft das Detail "A" in Fig. 1. Hierbei handelt es sich um die Anordnung und Befestigung der Filterelemente 2 innerhalb der Einzelrohre 1. Wie diese Abbildung zeigt, ist am oberen Ende des Einzelrohres 1 der innenliegende Flansch 10 angebracht, der eine Öffnung 11 aufweist, deren Durchmesser größer ist als der Durchmesser des verwendeten Filterelementes 2, so daß dieses ohne Schwierigkeiten durch die Öffnung 11 in das Einzelrohr 1 eingeführt werden kann. Das Filterelement 2 ist mit der Austrittsleitung 6 verbunden, an der außen der Gegenflansch 13 befestigt ist. Durch die Schrauben 14 oder ähnliche Befestigungsmittel wird das Filterelement 2, nachdem es durch die Öffnung 11 in das Einzelrohr 1 eingeführt worden ist, befestigt. Diese Schrauben 14 verbinden dabei den Gegenflansch 13 mit dem Flansch 10, wobei die dazwischen liegende Dichtungsscheibe 15 für eine druckdichte Abdichtung sorgt.

Fig. 4 zeigt schließlich das Detail "B" in Fig. 1. Dieses Detail betrifft die Abdichtung zwischen den Einzelrohren 1 am unteren Ende dieser Rohre. Man erkennt aus der Abbildung, daß der freie Raum zwischen den Einzelrohren 1 durch entsprechende Zwischenstücke 16 abgedichtet wird, die mit den Einzelrohren 1 druckdicht verschweißt werden. Selbstverständlich muß dabei die Formgebung dieser Zwischenstücke 16 der jeweiligen Formgebung der Einzelrohre 1 genau angepaßt werden.

## Patentansprüche

1. Druckfilter, bestehend aus zwei oder mehreren, jeweils in einem Einzelrohr (1) vertikal angeordneten und von dem zu filtrierenden Medium von außen nach innen durchflossenen Filterelementen (2), wobei die an ihrem unteren Ende offenen Einzelrohre in einen gemeinsamen Abschluß münden, der mit der Eintrittsleitung für das zu filtrierende Medium in Verbindung steht, dadurch gekennzeichnet, daß die Einzelrohre (1) in maximaler Packungsdichte miteinander fest verbunden sind und jedes Filterelement (2) über eine eigene, ihm zugeordnete Austrittsleitung (6) mit einer außerhalb de Druckfilters angeordneten und mit einem Ventil (21) versehenen Sammelleitung (7) verbunden ist, wobei jede Austrittsleitung (6) über einen Düsenstock (17) und ein Zuführungsrohr (18) mit einem durch ein Ventil (19) verschließbaren Druckgasspeicher (20) in Verbindung steht.

## Claims

1. Pressure filter consisting of two or more filter elements (2), each of which is disposed vertically in an individual tube (1) and through which the medium to be filtered flows from outside to inside, wherein the individual tubes, which are open at their bottom end, lead into a common closure in communication with the inlet pipe for the medium to be filtered, characterised in that the individual tubes (1) are made fast to one another with maximum packing density, and each filter element (2) is connected via its own, allocated outlet pipe (6) to a collecting pipe (7) which is disposed outside the pressure filter and is provided with a valve (21), each outlet pipe (6) being connected via a nozzle connection (17) and a feed pipe (18) to a compressed gas reservoir (20) which can be closed by a valve (19).

## Revendications

1. Filtre à pression de gaz, constitué de deux ou plusieurs éléments filtrants (2) disposés chacun verticalement dans un tube individuel (1) et traversés de l'extérieur vers l'intérieur par le milieu à filtrer, les tubes individuels ouverts à leur extrémité inférieure aboutissant à une terminaison commune qui communique avec la conduite d'entrée du milieu à filtrer, caractérisé en ce que les tubes individuels (1) sont connectés solidement les uns aux autres et de manière la plus dense possible, et en ce que chaque élément filtrant (2) est connecté, par l'intermédiaire d'une conduite de sortie (6) propre qui lui est affectée, à un collecteur (7) disposé à l'extérieur du filtre à pression de gaz et pourvu d'une soupape (21), chaque conduite de sortie (6) communiquant, par l'intermédiaire d'un porte-buse (17) et d'un tube d'amenée (18), avec un accumulateur à pression de gaz (20) obturable au moyen d'une soupape (19).
